Europäisches Patentamt

European Patent Office

Office européen des brevets

(19)

(11) Veröffentlichungsnummer: **0 406 800 B1**

(12) # EUROPÄISCHE PATENTSCHRIFT

(45) Veröffentlichungstag der Patentschrift: **08.06.94**

(51) Int. Cl.5: **F04C 29/02**, F16N 27/00

(21) Anmeldenummer: **90112680.5**

(22) Anmeldetag: **03.07.90**

(54) **Flügelzellen-Vakuumpumpe mit Dosiereinrichtung.**

(30) Priorität: **07.07.89 DE 3922367**
   **04.10.89 DE 3933047**

(43) Veröffentlichungstag der Anmeldung:
   **09.01.91 Patentblatt 91/02**

(45) Bekanntmachung des Hinweises auf die
   Patenterteilung:
   **08.06.94 Patentblatt 94/23**

(84) Benannte Vertragsstaaten:
   **CH DE ES FR GB IT LI**

(56) Entgegenhaltungen:
   **AT-B- 162 488**
   **DE-A- 2 716 559**
   **DE-C- 733 469**
   **DE-C- 967 127**
   **US-A- 1 614 556**

(73) Patentinhaber: **BARMAG AG**
   **Leverkuser Strasse 65**
   **Postfach 11 02 40**
   **D-42862 Remscheid(DE)**

(72) Erfinder: **Hertell, Siegfried**
   **Am Kattenbusch 22a**
   **D-5608 Radevormwald(DE)**
   Erfinder: **Mahnke, Bernd**
   **Auf den Wiesen 7**
   **D-5632 Wermelskirchen(DE)**
   Erfinder: **Lange, Robert**
   **Dietrich-Bonhoefferstrasse 104**
   **D-5608 Radevormwald(DE)**
   Erfinder: **Brandstädter, Manfred**
   **Rudolf-Breitscheid-Strasse 1**
   **D-4000 Düsseldorf 13(DE)**

(74) Vertreter: **Pfingsten, Dieter, Dipl.-Ing.**
   **Barmag AG**
   **Postfach 11 02 40**
   **D-42862 Remscheid (DE)**

EP 0 406 800 B1

EP 0 406 800 B1

**Beschreibung**

Die Erfindung betrifft eine Flügelzellen-Vakuumpumpe nach dem Oberbegriff des Anspruchs 1. Diese ist bekannt durch die DE-PS 29 52 401, (US-A 4,478,562).

Bei der bekannten Pumpe erfolgt die Ölzufuhr über eine Drucköldleitung, durch die der Ölstrom der Rotorwelle zugeführt und über ein Kanalsystem, das einen in die Welle eingebrachten Radialkanal und eine in die Lagerbohrung eingebrachte Axialnut aufweist. Hierdurch wird der Ölstrom in einen periodisch unterbrochenen, intermittierenden Ölstrom zerlegt.

Die intermittierende Ölzufuhr hat den Vorteil, daß die Ölzufuhr nur in den unteren Drehzahlbereichen von der Drehzahl abhängig ist und im wesentlichen proportional mit der Drehzahl ansteigt, daß aber bei Erreichen einer bestimmten Schwelldrehzahl kein weiterer Anstieg der in der Zeiteinheit zugeführten Ölmenge erfolgt. Durch die intermittierende Schmierung kann daher die Ölzufuhr auf das notwendige Maß begrenzt werden.

Dabei ist allerdings die Kennlinie, mit der die pro Zeiteinheit zugeführte Ölmenge von der Drehzahl abhängt, auch von der Druckdifferenz abhängig, welche zwischen dem Ölzufuhrkanal und dem Ölablaufkanal besteht. Diese Druckdifferenz hängt bei der bekannten Ausführung ab von dem Überdruck des Öls im Ölzufuhrsystem und von dem Druck des Ölablaufkanals. Wenn die Pumpe - wie bekannt und üblich - mit einem Rückschlagventil ausgestattet wird, welches den Luftauslaßkanal in Auslaßrichtung sperrt, und wenn andererseits die Pumpe an ein Unterdrucksystem angeschlossen ist wie z.B. den Bremskraftverstärker eines Kraftfahrzeugs, so herrscht in der Pumpe und in dem Ölablaufkanal Unterdruck und die Druckdifferenz hängt auch von diesem Unterdruck ab.

Eine variable Druckdifferenz und eine variable Ölzufuhr besteht daher nicht nur bei Drucköldzufuhr, sondern auch dann, wenn die Ölzufuhr - wie auch bekannt - dadurch erfolgt, daß in den Ölzufuhrkanal ein freier Ölstrahl gerichtet wird.

Die intermittierende Ölzufuhr kann ferner nicht verhindern, daß infolge des in der Pumpe herrschenden Unterdrucks Öl auch im Stillstand angesaugt wird und zur Überschwemmung der Pumpe führt.

Die Erfindung hat sich zur Aufgabe gemacht, die aus der bekannten Flügelzellen-Vakuumpumpe bekannte Dosiereinrichtung so weiterzubilden, daß die geförderte Ölmenge von der Druckseite der Schmieröldversorgung der Brennkraftmaschine zur Vakuumseite der Flügelzellen-Vakuumpumpe bei Stillstand unterbrochen werden kann.

Diese Aufgabe löst die Erfindung durch die kennzeichnenden Merkmale des Anspruchs 1 oder 6.

Zwar sind aus der DE C 967 127, sowie der DE 733 469 und der US A 1 614 556 Dosiereinrichtungen zum Dosieren eines Fluidstroms im Sinne einer exakten Bemessung bekannt. Derartige Dosiereinrichtungen sind bei Flügelzellen-Vakuumpumpen allerdings während des Betriebes ohne Funktion, da die Dosierkörper aufgrund der hohen Pumpendrehzahl lediglich um ihre Mittellage schwingen und zu der Dosierung des Fluidstroms nicht mehr beitragen können.

Aus der Erfindung ergibt sich der Vorteil, daß der Dosierzylinder einerseits einen vergrößerten Ölstrom durchläßt und andererseits der Ventilkörper bzw. der Kolben ein Vollaufen der Flügelzellen-Vakuumpumpe im Stillstand verhindert.

Auch bei der Lösung nach Anspruch 1 wirken der oder die in einem der Dosierzylinder beweglichen Ventilkörper als Dosierkolben.

Die Erfindung kann ganz allgemein als Dosiereinrichtung für einen Flüssigkeitsstrom verwandt werden. Die wesentlichen Elemente dieser Dosiereinrichtung sind ein Dosierzylinder, der von der Flüssigkeit durchströmt wird und in dem ein Ventilkörper beweglich ist, sowie ein Stromrichtungswandler (Kommutator), mit dem die Durchflußrichtung des Flüssigkeitsstromes fortwährend umgekehrt werden kann. Im Rahmen dieser Anmeldung übernimmt die rotierende Welle die Funktion des Kommutators.

In einer Ausführung der Erfindung nach Anspruch 1 besteht die Dosiereinrichtung aus einem solchen Kommutator und zwei Rückschlagventilen, die mit entgegengesetzter Flußrichtung hintereinandergeschaltet sind.

Der Ventilkörper desjenigen Rückschlagventils, welches in Öffnungsrichtung durchströmt wird, bewegt sich einwärts, so daß die als Dosierzylinder wirkende Ventilkammer mit Öl gefüllt wird. Dreht sich die Welle nun weiter, so daß die Ventilanordnung in der anderen Stromrichtung durchströmt wird, so bewegt sich der zuvor erwähnte Ventilkörper auswärts, bis er vor seinen Sitz schlägt. Dadurch wird das zuvor in die Ventilkammer eingeströmte Öl wieder ausgedrückt. Zur selben Zeit ist die Ventilkammer auf der Gegenseite, d.h. im Bereich des Rückschlagventils, welches nun in Öffnungsrichtung durchströmt wird, gefüllt worden. Bei Weiterdrehung der Welle wird dieser Bereich anschließend entleert.

Es ist ersichtlich, daß bei der Ausführung nach Anspruch 1 zwei Rückschlagventile mit entgegengesetzter Durchflußrichtung hintereinandergeschaltet werden können. Dabei kann jedes Rückschlagventil eine

2

EP 0 406 800 B1

separate Ventilkammer haben. Es ist jedoch auch möglich, in einer Ventilkammer zwei Ventilkörper unterzubringen, wobei deren Sitze jeweils an einem der Enden der Ventilkammer sind.

Eine vereinfachte Bauweise wird erreicht, wenn in einer einzigen als Dosierzylinder wirkenden Ventilkammer ein einziger Ventilkörper angeordnet wird. Hierbei steht für den einzigen Ventilkörper die gesamte radiale Länge des Dosierzylinders zwischen den Ventilsitzen zur Vefügung. Es ergibt sich hierbei eine große Dosiermenge und andererseits eine einfache Bauweise. Die Anschläge bzw. Sitze können aber auch enger zueinander gelegt werden.

Der genauen Dosierung dient der Vorschlag nach Anspruch 3. Hierbei haben die Ventilkörper gegenüber der Radialbohrung keine Leckage, so daß bei vorgegebener Stromrichtung kein Öl von der einen auf die andere Seite des Ventilkörpers gelangt.

Im Gegensatz dazu hat die Lösung nach Anspruch 2 den Vorteil, daß die Ventilkörper sehr leichtgängig sind, ohne besondere Fertigungsgenauigkeit eingepaßt werden können, trotzdem eine hohe Dosiergenauigkeit gewährleisten und darüber hinaus - je nach Bemessung des auf dem Umfang der Ventilkörper gebildeten Spalts - eine begrenzt vergrößerte Dosiermenge durchlassen.

Dies wird erreicht, indem der Ventilkörper nach Art eines Schwebekörpers einen Drosselspalt zu dem Dosierzylinder aufweist, wobei dieser Drosselspalt im Querschnitt wesentlich geringer ist als der Querschnitt des Dosierzylinders.

Trotzdem erfolgt durch den Ventilkörper in seinen Endlagen jeweils ein dichtender Verschluß.

Die Weiterbildung nach Anspruch 4 oder 5 gewährleistet, daß Stöße und Schläge der Ventilkörper auf ihren Ventilsitzen vermieden werden, dies auch bei zylindrischer Ausführung des Ventilkörpers.

Bei der Ausführung der Erfindung nach Anspruch 6 ist der Dosierzylinder als Speicher ausgebildet, welcher durch den Kommutator wechselnd gefüllt und geleert wird. Auch hiermit ist eine sehr genaue Dosierung möglich. Dabei wird vorzugsweise vorgesehen, daß der Dosierzylinder auf der von dem Dosierraum abgewandten Seite durch einen Entlastungskanal mit einem Gebiet niederen Drucks verbunden ist.

Durch die Maßnahme nach Anspruch 7 werden Stöße vermieden, wenn der Dosierkolben beim Entleeren in seine Endposition einfährt.

Bei sämtlichen Ausführungen findet eine dosierte Förderung nur dann statt, wenn die kommutierende Welle in Betrieb ist. Im Stillstand ist der Flüssigkeitsstrom unterbrochen.

Aus diesem Grunde ist eine solche Dosiereinrichtung vorteilhaft verwendbar zur Schmierung rotierender Systeme, zum drehzahlbegrenzten Antrieb hydraulischer Kupplungen u.ä.

Besonders zweckmäßig wird eine solche Dosiereinrichtung für Vakuumpumpen verwandt zur Dosierung des Schmierölstroms. Die Dosiereinrichtung hat hier den Vorteil, daß trotz des Vakuums mit der daraus resultierenden Druckdifferenz, das auch im Stillstand der Vakuumpumpe fortbesteht, im Stillstand kein Schmieröl angesaugt werden kann. Dies wirkt sich besonders vorteilhaft aus, wenn als Vakuumpumpe eine Flügelzellenpumpe verwandt wird. Bei einer Flügelzellen-Vakuumpumpe würde das im Stillstand angesaugte Schmieröl beim Ingangsetzen der Pumpe zu einem Überdruck und damit zu Beschädigungen führen.

Bei Anwendung der Dosiereinrichtung auf eine solche Pumpe wird als Kommutator die Antriebswelle benutzt.

Es erfolgt hierbei also eine Dosierung des Schmierölstroms. Bei jeder Teildrehung, z.B. halben Umdrehung der Welle wird nur eine vorgegebene Ölmenge in die Pumpe eingelassen. Diese vorgegebene Ölmenge hängt ab von der radialen Beweglichkeit der Ventilkörper bzw. des Dosierkolbens. Es ist daher erforderlich, daß die Ventilkörper bzw. Dosierkolben über die für eine ausreichende Ölmenge erforderliche Distanz beweglich sind. Der zugelassene Weg der Ventilkörper wird durch Anschläge begrenzt, die in den Dosierzylinder ragen. Dabei sind die radial äußeren Anschläge in der Version nach Anspruch 2 als Sitze für die Ventilkörper ausgebildet, oder der Ventilkörper ist in der Version nach Anspruch 3 in dem Dosierzylinder nach Art eines Kolbens dichtend geführt. Mit diesen Maßnahmen wird verhindert, daß im Stillstand Öl angesaugt werden kann. In gleicher Weise ist jedoch auch die Dosiereinrichtung nach Anspruch 6 bzw. 7 für die Verwendung in Vakuumpumpen und insbesondere Flügelzellen-Vakuumpumpen geeignet.

Bei allen Ausführungen der Erfindung kann der Dosierzylinder ortsfest oder aber in der kommutierenden Welle angeordnet sein. Bei der Ausführung nach Anspruch 1 ergibt sich vorteilhaft eine Anordnung der kommutierenden Welle. Bei der Ausführung nach Anspruch 6 wird der Dosierzylinder vorteilhaft ortsfest angeordnet.

In der Welle kann der Dosierzylinder entweder radial oder achsparallel, vorzugsweise in der Drehachse der Welle liegen.

Im folgenden werden Ausführungsbeispiele der Erfindung beschrieben.

Es zeigen

Fig. 1             den Axialschnitt;

3

Fig. 2          den Radialschnitt durch eine Flügelzellenpumpe;

Fig. 3          den Axialschnitt eines weiteren Ausführungsbeispiels;

Fig. 4 bis 7    alternative Ausführungen des Radialkanals und der Ventilkörper zur Verwendung in den Ausführungsbeispielen nach Fig. 1 oder 3;

Fig. 8          alternative Ausführung der Kanäle zur Flüssigkeitsdosierung;

Fig. 9          eine weitere alternative Ausführung, bei der der Dosierzylinder ortsfest angeordnet ist;

Fig. 10,11      Axialschnitt und Radialschnitt eines Ausführungsbeispiels, bei dem der Dosierzylinder als Speicher ausgeführt ist.

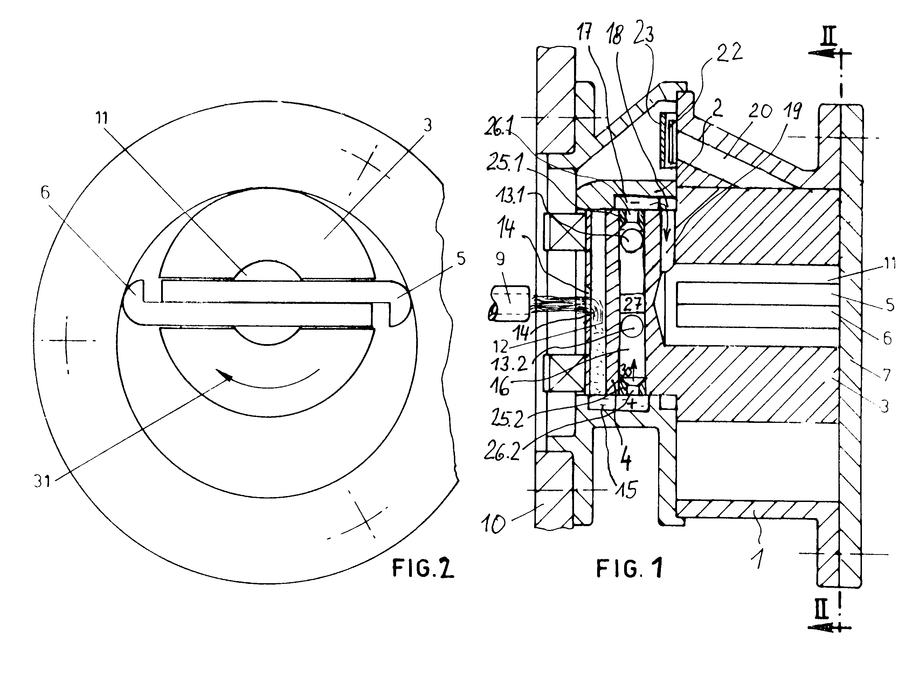

Die Ausführungsbeispiele nach Fig. 1 bis 9 stimmen im generellen Aufbau überein. Abweichungen werden im folgenden ausdrücklich erwähnt.

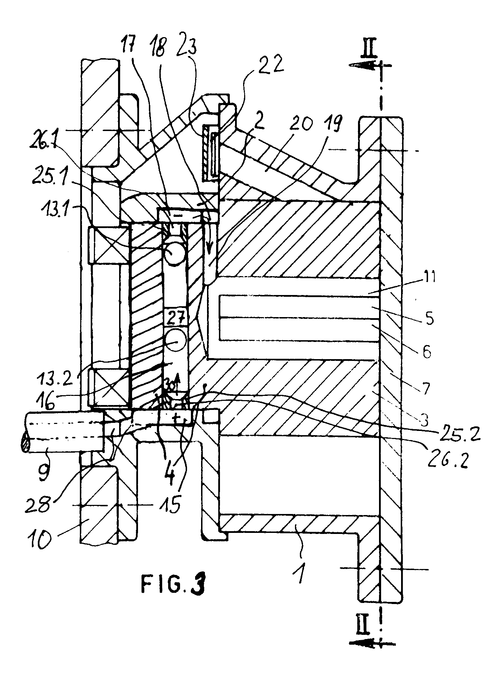

Es sei darauf hingewiesen, daß Fig. 2 auch auf das Ausführungsbeispiel nach Fig. 3 anwendbar ist.

In dem zylindrischen Pumpengehäuse 1 ist ein im Durchmesser kleinerer zylindrischer Rotor exzentrisch gelagert. Hierzu dient ein zum Rotor 3 konzentrischer Lageransatz 4, im folgenden "Welle" genannt. Der Rotor weist einen radialen Schlitz auf, in dem zwei Flügel 5 und 6 gleitend aufeinanderliegen. Eine solche Flügelzellen-Vakuumpumpe ist in der DE-OS 35 07 176 (Bag. 1396) beschrieben. Der Rotor ist - wie gesagt - nur einseitig gelagert und liegt mit einer Seite an der Stirnwand 7 des Gehäuses an. Auf der gegenüberliegenden Seite weist die Welle 4 Kupplungslappen 8 auf, mit denen die Welle 4 mit einer Antriebswelle, die mit dem Kraftfahrzeugmotor in Verbindung steht, gekuppelt ist. Die Welle 4 ist in einem Lagergehäuse 2 der Vakuumpumpe gleitgelagert. Das Lagergehäuse 2 der Vakuumpumpe ist an das Motorgehäuse 10 des Kraftfahrzeugmotors angeflanscht. Der Rotor 3 weist eine zentrische Bohrung 11 auf. Die Bohrung 11 steht durch ein Ölkanalsystem mit einer Ölzufuhrleitung 9 in Verbindung.

Bei der Ausführung nach Fig. 1 geschieht die Ölzufuhr in folgender Weise: Durch die Ölleitung 9 wird ein Freistrahl in eine zentrische Öffnung 14 der Welle 4 gespritzt. Die zentrische Mündung öffnet in einen radialen Verbindungskanal 12, der die Welle 4 radial durchdringt und mit einer Axialnut 15 kämmt und dadurch das Öl intermittierend der Axialnut 15 zuführt.

Bei der Ausgestaltung des Ausführungsbeispiels nach Fig. 3 fehlen die zentrische Öffnung 14 und der radiale Verbindungskanal 12. Die Ölleitung 9 ist hier durch einen Verbindungskanal 28 in dem Lagergehäuse 2 unmittelbar mit der Axialnut 15 verbunden.

Die Axialnut 15 ist in die Innenwand des Lagergehäuses 2 eingebracht und besitzt eine begrenzte axiale Länge.

Bei der Ausführung nach Fig. 1 erstreckt sich die Axialnut 15 aus der Normalebene, in welcher der Verbindungskanal 12 umläuft, bis in eine zweite Normalebene, in welcher ein Radialkanal 16 umläuft.

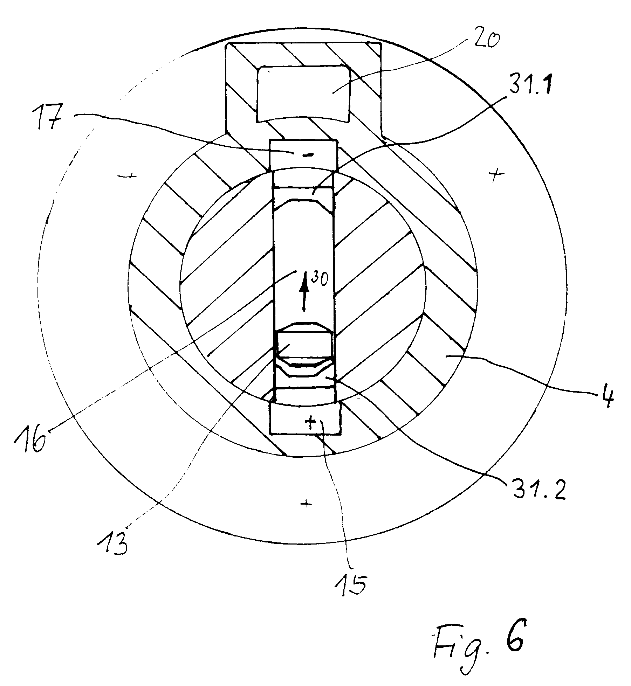

Bei der Ausführung nach Fig. 3 liegt die Axialnut lediglich in der Normalebene, in welcher der Ringkanal 16 umläuft. Der Radialkanal 16 durchdringt die Welle 4. An den Radialkanal 16 schließt sich eine Axialnut 17 von begrenzter Länge an, welche ebenfalls in die Innenwand des Lagergehäuses eingearbeitet ist. Die Axialnut 17 erstreckt sich aus der Normalebene, in welcher der Radialkanal 16 umläuft, bis zu einem Ringkanal 18. Der Ringkanal 18 ist in die Innenwandung des Lagergehäuses 2 eingebracht, und zwar im Grenzbereich zum Rotor 3. In der Normalebene des Ringkanals 18 besitzt der Rotor bzw. der Lageransatz einen Stichkanal 19, welcher den Ringkanal 18 und die Bohrung 11 miteinander verbindet. In dem Radialkanal 16 sind zwei Ventilkörper 13.1 und 13.2 frei beweglich. Es handelt sich in dem gezeigten Ausführungsbeispiel um Kugeln, deren Durchmesser geringer als der Durchmesser des zylindrischen Radialkanals 16 ist. Der Radialkanal 16 ist an seinen beiden Enden durch Sitz 25.1 bzw. 25.2 jeweils mit der zentralen Durchgangsöffnung 26.1 und 26.2 verschlossen. Die Ventilkörper 13.1 bzw. 13.2 sind - wie gesagt - frei zwischen einem zentrisch angebrachten Anschlag 27 und ihrem jeweiligen Sitz 25.1 bzw. 25.2 beweglich. Die Sitze 25.1 und 25.2 wirken also auch als Anschläge. Darüber hinaus schließen die Ventilkörper 13.1 bzw. 13.2 die jeweiligen Durchgangsöffnung 26.1 bzw. 26.2 bei der einen Ausgestaltung dicht, bei der anderen Ausgestaltung drosselnd, bei einer dritten Ausgestaltung, auf die später noch eingegangen wird im Zusammenhang mit Fig. 6, gar nicht ab. Der Anschlag 27 besitzt die Form eines Steges, der den Radialkanal 16 durchdringt, ohne den Durchfluß zu hindern.

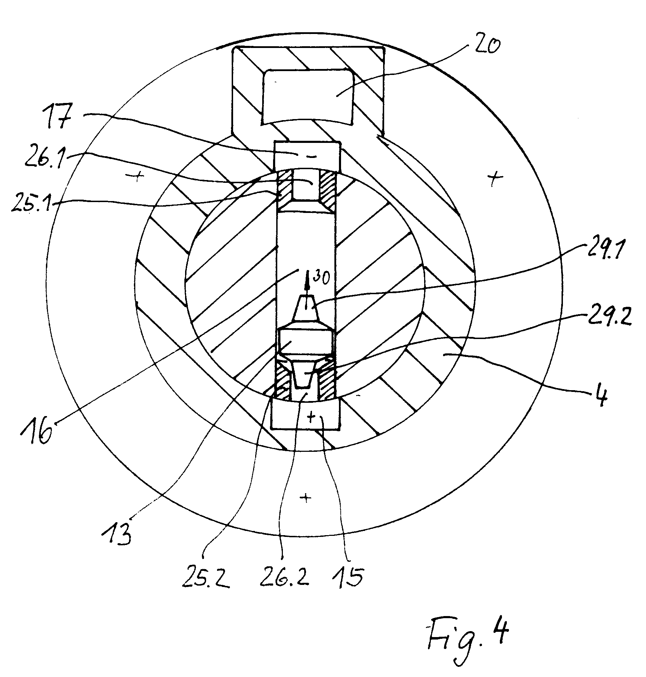

Figuren 4 bis 7 zeigen Alternativen für die Ausgestaltung des Radialkanals 16 und der darin angeordneten Ventilkörper. Die Figuren 4 bis 7 stellen einen Schnitt durch die Welle 4 in der Normalebene des Radialkanals 16 dar.

Im übrigen entsprechen die Ausführungen nach Fig. 4 bis 7 derjenigen nach den Fig. 1 und 3: Der Radialkanal verbindet intermittierend die Axialnuten 15 und 16, die in den Innenmantel des Gehäuses eingebracht sind. Die Axialnut 15 ist entweder - entsprechend dem Ausführungsbeispiel nach Fig. 1 - über einen radialen Verbindungskanal oder - entsprechend dem Ausführungsbeispiel nach Fig. 3 - über einen im Lagergehäuse 4 angebrachten Verbindungskanal mit der Ölleitung 9 verbunden. Insofern gelten die Ausführungen zu Fig. 1, 2 und 3.

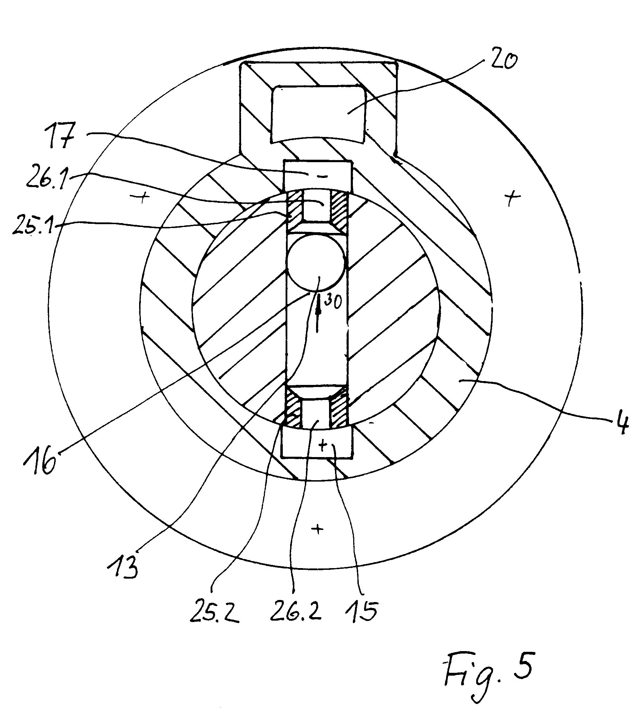

In Fig. 1 und 3 wurde dargestellt, daß in dem Radialkanal zwei Rückschlagventile, jeweils bestehend aus Ventilkörper 13.1 bzw. 13.2 und Sitz 25.1 bzw. 25.2 angeordnet sind. In den in Fig. 4 bis 7 dargestellten Alternativen werden die beiden Rückschlagventile durch einen einzigen Ventilkörper 13 bedient. Es fehlt also der zentrische Anschlag 27. Der Ventilkörper 13 ist zwischen den beiden Sitzen 25.1 und 25.2 (Fig. 4, 5) bzw. Anschlägen (Fig. 6) frei beweglich.

Es wird anhand von Fig. 4 ferner dargestellt, daß erfindungsgemäß auch der harte metallische Aufschlag des Ventilkörpers auf den jeweiligen Sitzen vermieden werden kann. Dabei gelten die folgenden Ausführungen sowohl bei der Version mit zwei Ventilkörpern als auch bei der in Fig. 4 gezeigten Version. Der Ventilkörper 13 ist zylindrisch ausgeführt. Daher kann er sich um eine Querachse des Radialkanals nicht drehen. Die den jeweiligen Sitzen 25.1 bzw. 25.2 zugewandten Stirnflächen des Ventilkörpers 13 besitzen Dämpfungszapfen 29.1 und 29.2. Jeder dieser Dämpfungszapfen ist der Durchgangsöffnung 26.1 bzw 26.2 der Sitze angepaßt. Hierzu kann der Dämpfungszapfen zylindrisch ausgebildet sein und einen Durchmesser haben, der im wesentlichen dem Durchmesser der zylindrischen Durchgangsöffnungen 26.1 bzw. 26.2 entspricht bzw. etwas kleiner ist. Im dargestellten Beispiel ist der Dämpfungszapfen konisch ausgeführt, wobei der größte Durchmesser nicht größer als der Durchmesser der Durchgangsöffnungen 26.1 bzw. 26.2 ist. Die Länge der Dämpfungszapfen 29.1 bzw. 29.2 ist axial begrenzt, da hiervon die Bewegungsstrecke der Ventilkörper abhängt.

Bei der Ausführung nach Fig. 5 ist der Ventilkörper 13 als Kugel ausgeführt, die zwischen den Sitzen 25.1 und 25.2 beweglich ist.

Bei der Ausführung nach Fig. 6 sind die Sitze 25 ersetzt durch Anschläge 31.1 sowie 31.2. Die Anschläge 31.1 und 31.2 haben - wie die zuvor geschilderten Sitze 25.1 bzw. 25.2 ebenfalls die Funktion, den Dosierweg des Ventilkörpers 13 zu begrenzen. Sie haben jedoch nicht die Funktion, im Zusammenwirken mit dem Ventilkörper 13 den Durchfluß in einer Richtung zu sperren oder zu drosseln. Daher handelt es sich um Stege, gelochte Platten, strahlenförmig angeordnete Zungen oder dgl., die in dem Radialkanal mit vorbestimmtem Abstand eingebracht sind. Dieser Abstand bestimmt den möglichen Dosierweg des Ventilkörpers 13. Der Ventilkörper 13 ist in dem dargestellten Ausführungsbeispiel als Zylinderkörper ausgeführt. Es kann sich jedoch auch um eine Kugel handeln. Der Ventilkörper kann kolbenartig dichtend in der Radialbohrung geführt sein. Der Ventilkörper kann jedoch auch auf seinem Umfang einen Drosselspalt bilden.

Zur Dämpfung des Aufschlages auf die Anschläge 31.1 und 31.2 können der Ventilkörper und/oder die Anschläge als federelastische Körper ausgeführt sein. Es ist jedoch auch möglich, daß die Anschläge und der Ventilkörper einerseits hydraulische Kammern und andererseits darin eingepaßt Vorsprünge aufweisen, die im Zusammenwirken eine hydraulische Dämpfung des Aufschlages bewirken.

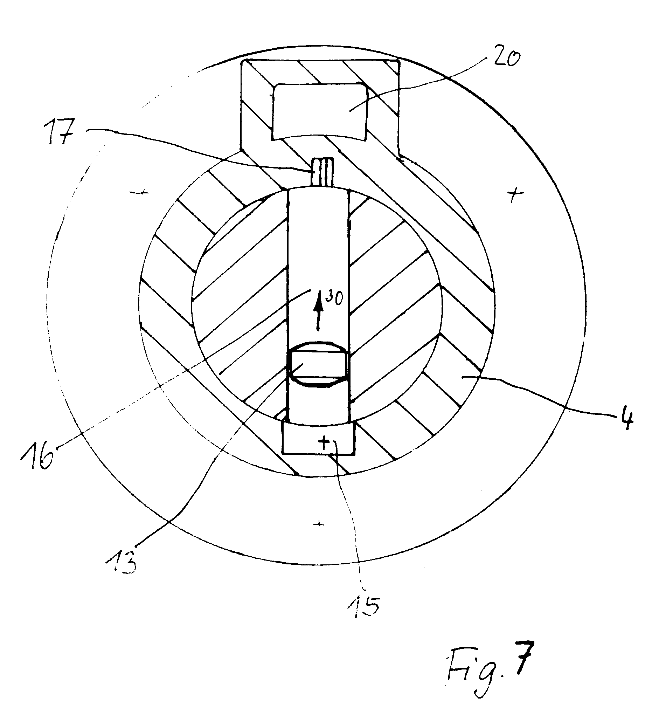

Bei der Ausführung nach Fig. 7 wirken die Wandungen des Lagergehäuses als Anschläge, wobei allerdings zu bemerken ist, daß im Betrieb nur ein Anschlag im Bereich des Ölablaufkanals in Betracht kommt. Daher ist der Ölablaufkanal so schmal, daß der Ventilkörper 13 nicht in ihn eindringen kann.

Zur Funktion:

Bei dem Ausführungsbeispiel nach Fig. 1 wird das Öl durch Ölleitung 9, die Bestandteil der Antriebswelle für die Pumpe sein kann, in einen Freistrahl in die zentrische Öffnung 14 gespritzt. Daher steht das von hier aus in den radialen Verbindungskanal 12 gelangende Öl unter Atmosphärendruck, eventuell verstärkt durch die Zentrifugalbeschleunigung. Folglich steht das Öl auch in der ersten Axialnut 15 unter Atmosphärendruck.

Da die Pumpe als Vakuumpumpe arbeitet und an einen evakuierten Behälter angeschlossen ist, z.B. einen Bremskraftverstärker, und da der Auslaß 20 durch das Auslaßventil 22 und 23, das als Rückschlagventil wirkt, gegenüber dem Atmosphärendruck verschlossen ist, steht der Innenraum des Pumpengehäuses 1 auch unter Vakuum. Infolge der gewollten und unvermeidlichen Leckagen ist daher auch die Bohrung 11 evakuiert. Infolge der Verbindung über Stichkanal 19 und Ringkanal 18 ist auch die Axialnut 17 evakuiert. Es besteht daher zwischen der Axialnut 15 und der Axialnut 17 eine Druckdifferenz von 1 bar.

Bei dem Ausführungsbeispiel nach Fig. 1 wird das Öl aus Leitung 9 dem Stichkanal unter höherem als Atmosphärendruck, z.B. 6 bar zugeführt. Auch bei diesem Ausführungsbeispiel steht die Bohrung 11 unter Vakuum. Insofern wird auf die vorigen Ausführungen verwiesen. Daher besteht auch hier zwischen den Axialnuten 15 und 17 eine Druckdifferenz.

Wenn die Radialbohrung 16 in der eingezeichneten Drehstellung mit den Axialnuten 15 und 17 fluchtet, so wird durch die Druckdifferenz ein Ölstrom bewirkt, welcher die Ventilkörper 13.1 und 13.2 in der eingezeichneten Pfeilrichtung 30 befördert, bis der Ventilkörper 13.2 gegen den Anschlag 27 stößt und der Ventilkörper 13.1 sich auf seinen Sitz 25.1 aufsetzt. Dabei können die Ventilkörper 13 entweder kolbenartig dicht in die Radialbohrung eingepaßt sein, so daß auf ihrem Umfang keine Leckage besteht. In diesem Falle ist die geförderte Ölmenge abhängig von dem Weg der Ventilkörper 13 zwischen dem Sitz 25 und dem Anschlag 27 bzw. umgekehrt. Die Ventilkörper der Rückschlagventile wirken also wie Dosierkolben.

Die Ventilkörper können jedoch auch einen Spalt auf ihrem Umfang gegenüber der Radialbohrung freilassen. Der Spalt muß einen ausreichenden Strömungswiderstand bewirken, um die Druckdifferenz an den Ventilkörpern 13 aufrechtzuerhalten. Der Spalt ist daher kleiner als der Querschnitt des Radialkanals. Hierauf wird bei der Funktionsbeschreibung von Fig. 6 noch eingegangen.

Die Ventilkörper wirken hierbei wie Schwebekörper, die zwischen den Ventilsitzen 25 beweglich sind. Bei dieser Ausgestaltung wird zwar die Dosiergenauigkeit beeinträchtigt, da die geförderte Ölmenge nicht nur von Weg und Querschnitt der Ventilkörper, sondern außerdem von den Leckagen am Umfang der Ventilkörper abhängig ist. Jedoch kann hierdurch die zugeführte Ölmenge vergrößert und die Kennlinie beeinflußt werden.

Weiterhin ist es möglich, daß zur Erzielung einer hohen Dosiergenauigkeit die Ventilkörper die Durchgangsöffnungen 26 vollständig verschließen, also dicht auf den Sitzen 25 aufsitzen. Es ist jedoch auch möglich, daß durch das Zusammenwirken der Ventilkörper 13 und Sitze 25 lediglich eine verstärkte Drosselung des Ölstromes erfolgt. Auch hierbei wird zusätzlich zu der durch die Bewegung der Ventilkörper verdrängten Ölmenge der gedrosselte Ölstrom gefördert, sofern auch die Ventilkörper gegenüber der Radialbohrung den zuvor geschilderten Drosselspalt freihalten.

Es sei schließlich darauf hingewiesen, daß die Sitze 25 auch vollständig entfallen und ohne Sperr- oder Drosselwirkung ausgebildet sein können. In diesem Falle werden die Sitze durch Anschläge ersetzt. Als Anschläge können auch die Wandungen des Lagergehäuses dienen.

Bei der Ausgestaltung nach Fig. 4 ist in der Radialbohrung 16 nur ein einziger Ventilkörper beweglich. Auch dieser Ventilkörper kann gegenüber der Radialbohrung einen Umfangsspalt freilassen, so daß Leckage möglich ist. Infolge der Druckdifferenz, die an dem Ventilkörper 13 zwischen der Axialnut 15 und der Axialnut 17 besteht, wird der Ventilkörper mit Pfeilrichtung 30 von dem Sitz 25.2 abgehoben und gegen den Sitz 25.1 bewegt und gedrückt. Damit wird die in dem Radialkanal 16 in Bewegungsrichtung vor dem Ventilkörper 13 befindliche Ölmenge ausgedrückt in den Axialkanal 17. Andererseits wird der Radialkanal 16 hinter dem Ventilkörper 13 von der Axialnut 15 aus gefüllt. Bei Weiterdrehung um 180° folgt der gleiche Vorgang mit - relativ zu dem Radialkanal 16 - umgekehrter Bewegungs- und Stromrichtung 30.

Für beide Ausführungsbeispiele gilt:
Wenn der Ventilkörper gegenüber der Radialbohrung kolbenartig dicht geführt ist, so wird lediglich die durch den Dosierweg des Ventilkörpers verdrängte Flüssigkeitsmenge gefördert. Wenn dagegen der Umfang des Ventilkörpers gegenüber der Radialbohrung einen Drosselspalt freiläßt, wird während der Ausführung des Dosierweges auch noch eine zusätzliche Ölmenge durchgelassen.

Wenn sich der Ventilkörper 13 einem der Sitze 25.1 bzw. 25.2 nähert, so tauchen die an den Stirnseiten des Ventilkörpers angebrachten Zapfen 29.1 bzw. 29.2 in die Durchlaßöffnungen der Sitze 26.1 und 26.2 ein. Wenn die Dämpfungszapfen 29.1, 29.2 denselben Durchmesser haben wie die Durchlaßöffnungen 26.1, 26.2 der Sitze 25, so wirken die Sitze gemeinsam mit den Stirnflächen als hydraulische Pufferkammern, da bei Eintauchen der Dämpfungszapfen kein Öl mehr durch die Durchgangsöffnungen 26.1, 26.2 entweichen kann.

Wenn die Dämpfungszapfen zylindrisch ausgeführt sind und einen Durchmesser haben, der kleiner als der Durchmesser der Durchgangsöffnungen 26.1, 26.2 ist, so kann beim Eintauchen der Dämpfungszapfen in die Öffnungen aus den Kammern, welche zwischen dem jeweiligen Sitz und der jeweiligen Stirnfläche des Ventilkörpers gebildeten werden, nur noch ein gedrosselter Ölstrom entweichen. Dabei nimmt die Stärke der Drosselung mit der Eintauchtiefe der Zapfen in die Durchgangsöffnungen zu. Die Kammer wirkt daher nicht nur als hydraulischer Puffer, sondern zusätzlich auch als hydraulische Dämpfung.

Wenn - wie gezeigt - der Zapfen konisch ausgebildet ist, so kann die Drosselcharakteristik in Abhängigkeit von der Eintauchtiefe so gestaltet werden, daß die Annäherung des Ventilkörpers 13 an den jeweiligen Sitz gezielt weich und gedämpft abgebremst wird, so daß sowohl mechanische als auch hydraulische Schläge im System vermieden werden können.

Bei der Alternative nach Fig. 5 ist der Ventilkörper als einfache Kugel ausgebildet, die mit den Sitzen 25.1 und 25.2 wie ein Rückschlag- oder Wechselventil zusammenwirkt. Die Kugel kann wiederum dichtend oder nach Art eines Schwebekörpers in der Radialbohrung geführt sein. Im letzteren Fall kann es ferner sinnvoll sein, durch Zusammenwirken von Kugel 13 und Sitz 25 lediglich eine Drosselung zu bewirken, so daß auch beim Zusammenwirken noch ein gedrosselter Ölstrom möglich ist.

Bei dem Ausführungsbeispiel nach Fig. 6 hängt die geförderte Ölmenge von dem Abstand zwischen den Anschlägen 31.1 und 31.2 ab. Bei Bewegung des Ventilkörpers 13 kann die in dem Radialkanal 16 befindliche Ölmenge mit Förderrichtung 30 ohne Drosselung ausgetrieben werden. Wenn der Ventilkörper kolbenartig dicht geführt ist, so ist auch in dieser Ausführung eine genau dosierte Ölzulieferung möglich. Wenn der Ventilkörper 13 auf seinem Umfang mit dem Radialkanal einen Drosselspalt freiläßt, so wird - solange der Radialkanal 16 mit den Axialnuten 15 und 17 fluchtet - zusätzlich eine gedrosselte Ölmenge gefördert. Bei dieser Ausführung ist es daher zur Begrenzung der Ölmenge wichtig, daß der Drosselwiderstand, den der Ventilkörper 13 in der Radialbohrung 16 hervorruft, groß ist im Verhältnis zu dem Drosselwiderstand des Radialkanals mit seiner vollen Querschnittsfläche. Dabei gehen nicht nur die Spaltweite, sondern auch die Spaltlänge in die Höhe des Drosselwiderstandes ein, den der Ventilkörper in dem Radialkanal 16 hervorruft.

Fig. 7 zeigt schließlich ein Ausführungsbeispiel, bei dem der Dosierweg des Ventilkörpers 13 dadurch beschränkt ist, daß die Weite der Axialnut 17 in Umfangsrichtung wesentlich geringer ist als der Durchmesser der Radialbohrung 16. Bei diesem Ausführungsbeispiel ist ebenfalls eine hydraulische Dämpfung dadurch gegeben, daß die Stirnflächen des Ventilkörpers mit der Lagerwandung im Bereich der Axialnut 17 eine Puffer- und Dämpfungskammer bilden, wobei die Puffer- und Dämpfungswirkung dieser Kammern von dem Drosselwiderstand der Axialnut 17 abhängt. Es ist daher möglich - wie eingezeichnet - den Axialkanal 17 hinter der Normalebene des Radialkanals 16 drosselartig zu verengen.

Die Stirnflächen des Ventilkörpers 13 besitzen dabei vorzugsweise eine kugelige oder tonnenförmige Form, wobei der Durchmesser denjenigen der Lagerwandung bzw. des Rotors im wesentlichen entspricht.

Zweckmäßigerweise besitzt die Axialnut 15 des Ölzulaufkanals auf ihrer dem Radialkanal zugewandten Oberseite eine Sperre, die hier nicht gezeichnet ist, da sie nicht funktionsnotwendig ist. Durch diese Sperre wird lediglich verhindert, daß im Stillstand oder bei Ausfall der Ölversorgung der Ventilkörper in die Axialnut eindringt und die Drehung des Pumpenrotors sperrt und dadurch zum Bruch führt.

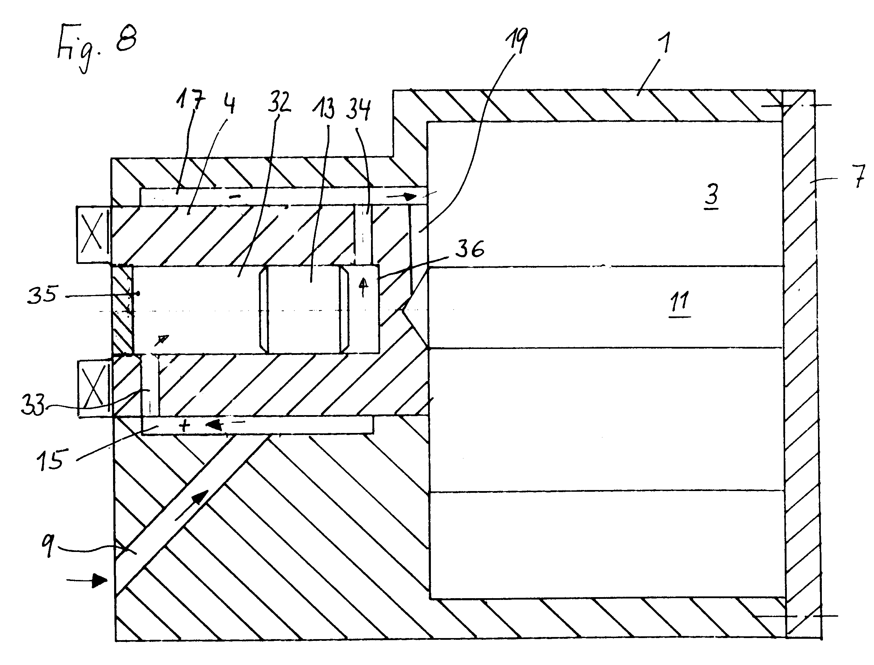

Bei dem Ausführungsbeispiel nach Figur 8 wird der Radialkanal zerlegt in einen axialen Dosierzylinder 32 und zwei radiale Stichkanäle 33 und 34. Der Dosierzylinder ist in der Rotorachse innerhalb der Welle 4 angeordnet. Die radialen Stichkanäle gehen von den Enden des Dosierzylinders aus. Die radialen Stichkanäle 33, 34 sind um einen bestimmten Zentriwinkel der Welle, vorzugsweise um 180° zueinander versetzt. Die Mündungen der radialen Stichkanäle 33, 34 im Dosierzylinder 32 haben jeweils einen Abstand vom jeweiligen Ende des Dosierzylinders, so daß sich an den Enden jeweils ein Dämpfungs- und Pufferraum 35, 36 bildet, auf dessen Funktion noch eingegangen wird. In dem Dosierzylinder 32 ist der Ventilkörper 13 frei beweglich geführt und kolbenartig dicht oder nach Art eines Schwebekörpers mit Drosselspalt auf seinem Umfang eingepaßt. Der Schwebekörper 13 ist zylindrisch ausgeführt und kann in die Dämpfungs- und Pufferräume 35, 36 so weit eintauchen, daß er die Mündungen der radialen Stichkanäle 33, 34 in seinen Endlagen überdeckt und sperrt. Daher ist der Ventilkörper 13 bevorzugt kolbenartig dicht bzw. mit recht geringem Spiel im Dosierzylinder 32 eingepaßt.

Die radialen Stichkanäle 33 und 34 münden auf dem Umfang der Welle 4. In der Innenwandung des Lagergehäuses 2 liegen die beiden Axialnuten 15 und 17. Die Axialnuten 15 und 17 sind um 180° bzw. um denselben Winkel auf dem Umfang zueinander versetzt, um den auch die radialen Stichkanäle 33 und 34 zueinander versetzt sind. Die Axialnut 15 ist über Stichkanal 19 mit dem Ölzulauf verbunden. Dabei kann der Ölzulauf druckdicht an den Stichkanal 19 angeschlossen sein. Es kann aber auch Öl als Freistrahl in die Mündung des Stichkanals 19 gespritzt werden. Die Axialnut 17 erstreckt sich bis in den Bereich des Rotors und ist durch einen radialen Stichkanal 19 mit der Rotorinnenbohrung 11 verbunden. Die Axialnuten 15 und 17 erstrecken sich axial über den Abstand, mit dem die Mündungen der radialen Stichkanäle 33 und 34 auf der Oberfläche der Welle 4 voneinander entfernt sind. Hier haben die Mündungen der genau radial ausgerichteten Stichkanäle 33 und 34 einen axialen Abstand voneinander. Es ist ersichtlich, daß Stichkanäle 33, 34 so stark aus der radialen Richtung ausgelenkt werden können, daß die Mündungen einen geringeren axialen Abstand haben oder sogar mehr oder weniger auf derselben Normalebene liegen. Im letztgenannten Falle kann die Axialnut 15 auf den Bereich dieser Normalebene verkürzt werden, während die Axialnut 17 in diesem Falle von der Normalebene bis zu dem Stichkanal 19 reicht.

Zur Funktion:

Bei Drehung der Welle des Rotors entsteht in dem Pumpeninnenraum und damit auch über Leckagen in der Rotorinnenbohrung 11 ein Vakuum. Daher besteht zwischen der Axialnut 15 und der Axialnut 17 ein Druckgefälle von mindestens 1 bar. Infolge dieses Druckgefälles wird der Dosierzylinder 32 über die Stichkanäle 33, 34 mit wechselnder Richtung mit diesem Druckgefälle beaufschlagt. In der eingezeichneten Drehstellung wird daher der Ventilkörper 13 in Richtung des radialen Stichkanals 34 gedrückt, bis er den am niedrigeren Druck anliegenden, radialen Stichkanal 34 überdeckt und sperrt. Dadurch wird gleichzeitig die Puffer- und Dämpfungskammer 36 abgeschlossen. Durch die Ausbildung von konischen Enden an dem Ventilkörper 13 kann diese Absperrung mit zunehmender Drosselung geschehen. Dadurch werden hydraulische Stöße und Schläge vermieden. In der um 180° weitergedrehten Drehstellung wird der Dosierzylinder 32 über Stichkanal 34 mit dem höheren Druck beaufschlagt. Der Ventilkörper 13 bewegt sich in die andere Richtung, bis er den am niedrigeren Druck anliegenden, radialen Stichkanal 33 überdeckt und in die Puffer- und Dämpfungskammer 35 einfährt.

Es sei erwähnt, daß der Dosierzylinder 32 auch im Pumpengehäuse 1 oder Lagergehäuse 2 liegen kann. In diesem Falle dient die Kanalführung in der Welle lediglich der Kommutierung des Ölstroms in dem Sinne, daß die Enden des Dosierzylinders wechselweise mit dem höheren und dem niederen Druck beaufschlagt werden. Die Funktion bleibt jedoch identisch.

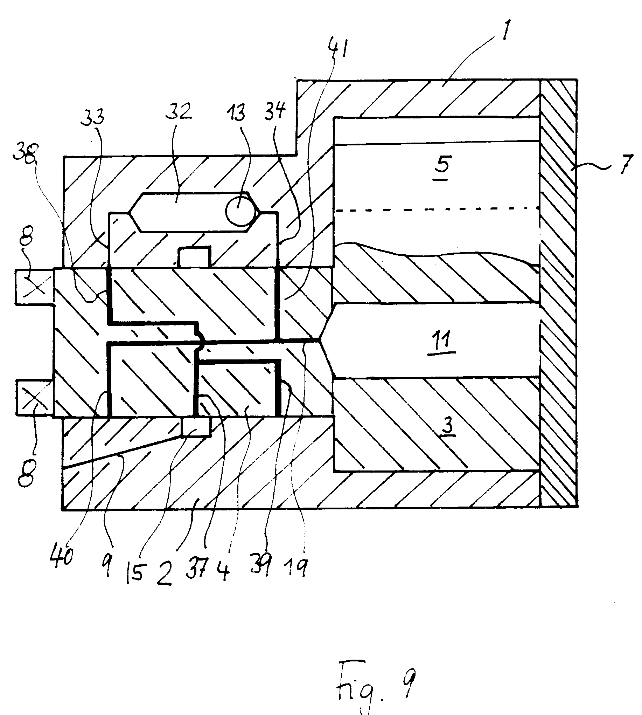

In der Fig. 9 ist ein derartiges Ausführungsbeispiel dargestellt. Der Dosierzylinder 32 ist achsparallel zur Welle 4 in dem Lagergehäuse 2 angelegt. Die Endbereiche des Dosierzylinders 32 sind durch die radialen Stichkanäle 33 und 34 in die Lagerbohrung geführt. Der Ölzufuhrkanal 9 mündet in einer Ringnut 15 der Lagerbohrung, die abseits von den Normalebenen liegt, in welchen die Stichkanäle 33 bzw. 34 münden. Die Ringnut 15 wird über Radialkanäle 37, 38, 39 wechselweise mit dem Stichkanal 33 und dem Stichkanal 34 verbunden, wobei der Stichkanal 37 in der Normalebene der Ringnut 15 und die Radialkanäle 38 jeweils in der Normalebene des Stichkanals 33 bzw. 34 liegen. Der Ölablaufkanal, welcher in die Bohrung 11 des Rotors 3 mündet und zentral in der Welle 4 angeordnet ist, ist durch Radialkanäle 40, 41 abwechselnd mit dem einen und dem anderen Endbereich des Dosierzylinders 32 verbunden. Hierzu liegen die Radialkanäle 40, 41 jeweils in der Normalebene des radialen Stichkanals 33 bzw. 34. Die Stichkanäle 37 bis 41 in Welle 4 liegen also in derselben Axialebene. Jedoch ist der Radialkanal 40 gegenüber dem Radialkanal 41 auf der Ablaufseite und der Radialkanal 39 gegenüber dem Radialkanal 38 auf der Zulaufseite jeweils um 180° auf dem Umfang versetzt.

In dem Dosierzylinder 32 ist der Schwebekörper 13 zwischen den Sitzen des Endbereiches beweglich. Dabei kann der Schwebekörper - wie zu den vorangegangenen Ausführungsbeispielen ausgeführt - kolbenartig dicht oder als Schwebekörper frei beweglich geführt sein. Ebenso sind Dämpfungseinrichtungen - wie zuvor beschrieben - möglich.

Zur Funktion:
Die Ölzufuhrleitung steht ständig unter Öldruck. Bei Drehung der Welle 4 ist der Radialkanal 37 ständig mit der Ringnut 15 verbunden. In der eingezeichneten Drehstellung fluchten der Radialkanal 38 sowie der radiale Stichkanal 33. Ebenso fluchten in dieser Drehstellung der Radialkanal 41 und der radiale Stichkanal 34. Daher besteht in dem Dosierzylinder 32 ein Druckgefälle von - bezogen auf die Zeichnung - links nach rechts. Es findet daher ein Ölstrom statt, bis der Ventilkörper 13 sich - wie eingezeichnet - auf seinen Sitz setzt und die rechte Endseite verschließt. Bei Drehung um 180° fluchten auf der Zulaufseite der Radialkanal 39 und der radiale Stichkanal 34 und auf der Ablaufseite der Radialkanal 40 und der radiale Stichkanal 33. Daher entsteht ein Druckgefälle von - bezogen auf die Zeichnung - rechts nach links. Es findet ein Ölstrom von rechts nach links statt, bis der Schwebekörper 13 sich in der linken Endstellung auf seinen Sitz setzt und den Ausgang verschließt. Wie aus der Zeichnung ersichtlich, sind diejenigen Radialkanäle 38, 39, 40, 41, welche jeweils nicht mit den radialen Stichkanälen 33, 34 des Dosierzylinders 32 in Verbindung stehen, durch die Lagerbohrung des Lagergehäuses 2 verschlossen.

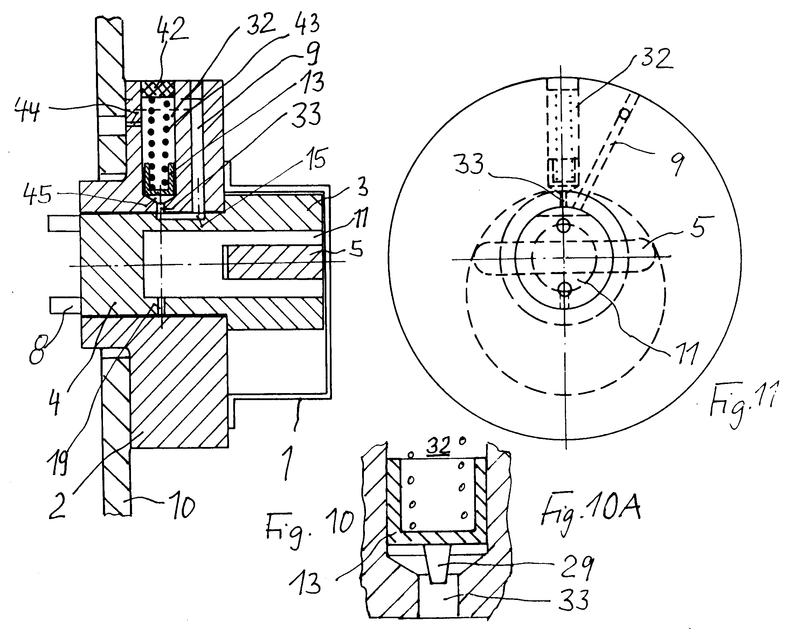

Die Dosiereinrichtung nach den Fig. 10 und 11 ist wiederum Bestandteil einer Flügelzellen-Vakuumpumpe. Die Pumpe besitzt ein topfförmiges Pumpengehäuse 1 und ein Lagergehäuse 2, an welchem das Pumpengehäuse 1 angeflanscht ist. In dem Lagergehäuse 2 ist die Welle 4 in einem Gleitlager drehbar gelagert. An der Welle 4 sitzt ein zylindrischer Rotor 3. Die Lagerwelle besitzt Kupplungslappen 8 für den Antrieb. Der Rotor weist eine Innenbohrung 11 auf, die bis in den Bereich der Welle 4 geht. Ferner besitzt der Rotor einen radialen Schlitz, in dem ein Flügel 5 gleitend beweglich gelagert ist. Das Pumpengehäuse ist so gestaltet und der Rotor ist in dem Pumpengehäuse derart exzentrisch gelagert, daß die beiden Flügelenden in allen Drehlagen des Rotors dichtend an der Innenwandung des Pumpengehäuses 1 anliegen.

Das Lagergehäuse 2 ist an einer Wand des Motorgehäuses 10 eines Kraftfahrzeuges befestigt. Die Pumpe dient zur Erzeugung des Vakuums für den Bremskraftverstärker. Auch der Auslaßkanal der Pumpe mündet in das Innere des Motorgehäuses 10. Der Saugkanal, also der Einlaß der Pumpe, ist mit dem Bremskraftverstärker verbunden.

Einlaß und Auslaß, die hier nicht dargestellt sind, werden jeweils durch ein Rückschlagventil verschlossen. Daher besteht nach dem Stillsetzen der Pumpe das Vakuum innerhalb des Pumpengehäuses fort. Das bedeutet, daß weiterhin Schmieröl angesaugt werden kann. Wenn nunmehr die Pumpe - eventuell sogar nach dem Erkalten des Öls - wieder in Gang gesetzt wird, muß das Öl durch den Auslaßkanal und das dort angegebene Rückschlagventil ausgepreßt werden. Der dabei entstehende Druck kann zum Zerbrechen der Flügel führen.

Aus diesem Grunde ist die Pumpe mit einer Dosiereinrichtung ausgerüstet, die während des Betriebes nur einen dosierten, dem Bedarf entsprechenden Schmierölstrom zuläßt und die andererseits im Stillstand gewährleistet, daß kein Schmieröl angesaugt werden und in das Innere des Pumpengehäuses gelangen kann. Das Schmieröl wird durch die Zufuhrleitung 9, die - im wesentlichen - radial in dem Lagergehäuse 2 liegt, unter Druck zugeführt. Die Zufuhrleitung 9 mündet auf dem Innenumfang der Lagerbohrung. In dem

8

Lagergehäuse 2 befindet sich weiterhin eine als Dosierzylinder dienende Bohrung 32, die durch einen Stopfen 42 verschlossen ist. Der Dosierzylinder 32 kann ebenfalls - im wesentlichen - radial ausgerichtet sein. Er besitzt an seinem radial inneren Ende einen Anschlußkanal 33, der ebenfalls auf dem Innenumfang der Lagerbohrung des Lagergehäuses 2 mündet. Die Mündungen der Zufuhrleitung 9 und des Anschlußkanals 33 liegen auf derselben Axialebene der Welle 4. Die Mündungen der Zufuhrleitung 9 und des Anschlußkanals 33 haben einen axialen Abstand voneinander. Die Welle besitzt auf ihrem Außenumfang in einer Axialebene eine Axialnut 15. Die Axialnut 15 ist so lang wie der axiale Abstand der Mündungen von Zufuhrkanal 9 und Anschlußkanal 33. Die Welle besitzt weiterhin winkelversetzt zu der Axialnut 15 einen Ablaufkanal 19. Der Ablaufkanal 19 mündet einerseits auf dem Außenumfang der Welle in derselben Radialebene wie der Anschlußkanal 33 und andererseits in der axialen Bohrung 11 des Rotors. Die Welle kann mehrere Paarungen von Axialnut 15 und Ablaufkanal 19 aufweisen. Dabei sind die Axialnuten 15 und Ablaufkanäle 19 jeweils winkelversetzt zueinander. In dem gezeichneten Beispiel ist nur eine Paarung mit einem Winkelversatz von 180° vorhanden.

In dem Dosierzylinder ist ein Dosierkolben 13 frei beweglich. Der Dosierkolben wird an dem Stopfen 42, welcher den Dosierzylinder 32 radial außen verschließt, durch eine Feder 43 abgestützt.

Der zwischen Stopfen 42 und Dosierkolben 13 befindliche Federraum wird durch einen Entlastungskanal 44 zum Motorraum hin druckentlastet.

Zur Funktion:

In der gezeichneten Drehstellung verbindet die Axialnut 15 den Zufuhrkanal 9 mit dem Dosierzylinder 32. Daher wird das unter Druck anstehende Schmieröl in den Dosierzylinder 32, und zwar in den Dosierraum 45, der von dem Federraum mit Feder 43 abgewandt ist, gefördert. Der Dosierkolben 13 wird gegen die Kraft der Feder 43 radial nach außen gedrückt und dadurch der Dosierraum 45 gefüllt. Bei Weiterdrehung der Welle 4 werden sowohl der Zufuhrkanal 9 als auch der Anschlußkanal 33 durch die Oberfläche der Welle verschlossen. Bei Weiterdrehung gelangt nunmehr der Ablaufkanal 19 in den Bereich des Anschlußkanals 33.

Dadurch wird nunmehr der Dosierraum 45 druckentlastet und die Feder 43 kann den Dosierkolben 13 radial nach innen drücken. Dadurch wird der Dosierraum 45 über den Anschlußkanal 33 und den Ablaufkanal 19 in die zentrale Bohrung 11 der Pumpe entleert. Bei weiterdrehung erfolgt wiederum die Verbindung des Zufuhrkanals 9 mit dem Dosierraum 45 über die Axialnut 15 und damit die Befüllung des Dosierraums 45.

In Fig. 10A ist dargestellt, daß der Kolben mit einem Dämpfungszapfen 29 versehen sein kann, welcher in den Anschlußkanal 33 eintaucht, wenn der Kolben sich radial einwärts bewegt und seine radial innen liegende Endstellung annähernd erreicht hat. Hierdurch erfolgt eine Drosselung und Dämpfung der Kolbenbewegung.

EP 0 406 800 B1

BEZUGSZEICHENAUFSTELLUNG

| | |
|---|---|
| 1 | Pumpengehäuse |
| 2 | Lagergehäuse |
| 3 | Rotor |
| 4 | Lageransatz, Welle |
| 5 | Flügel |
| 6 | Flügel |
| 7 | Stirnwand |
| 8 | Kupplungslappen |
| 9 | Ölleitung, Zufuhrleitung |
| 10 | Motorgehäuse |
| 11 | Bohrung |
| 12 | Verbindungskanal |
| 13 | Ventilkörper (13.1, 13.2) |
| 14 | zentrische Öffnung |
| 15 | Axialnut, Ringnut |
| 16 | Radialkanal |
| 17 | Axialnut |
| 18 | Ringkanal |
| 19 | Stichkanal, Ablaufkanal, Ölablaufkanal |
| 20 | Auslaß |
| 21 | Auslaßkanal |
| 22 | Auslaßventil |
| 23 | Abstützblech |
| 24 | Radialkanal |
| 25.1 | Sitz |
| 25.2 | |
| 26.1 | Durchgangsöffnung |
| 26.2 | |
| 27 | Anschlag |
| 28 | Verbindungskanal |

10

29.1   Dämpfungszapfen

29.2

30     Pfeilrichtung

31.1   Anschlag

31.2

32     Dosierzylinder

33     radialer Stichkanal, Anschluß

34     radialer Stichkanal, Anschluß

35     Pufferraum

36     Pufferraum

37 )

38 )

39 )  Radialkanäle

40 )

41 )

42     Stopfen

43     Feder

44     Entlastungskanal

45     Dosierraum

**Patentansprüche**

1.  Flügelzellen-Vakuumpumpe, die an die Schmierölversorgung eines Kraftfahrzeugmotors angeschlossen ist,
mit einer
Dosiereinrichtung zum Dosieren des Ölstromes, der unter Wirkung einer Druckdifferenz aus einem Zufuhrkanal (9) durch Kanäle der rotierenden Pumpenwelle (4) zu einem Ablaufkanal (19) derart geführt wird, daß die Kanäle der Pumpenwelle (4) den Zufuhrkanal (9) mit dem Ablaufkanal (19) intermittierend in Abhängigkeit von der Drehstellung der Pumpenwelle (4) verbinden,
dadurch gekennzeichnet, daß
die Dosiereinrichtung einen Dosierzylinder (32) aufweist, in dem ein Ventilkörper (13) frei beweglich geführt ist,
und daß
der Ventilkörper (13) lediglich bei Stillstand der Pumpenwelle (4) dichtend zwischen der Druckseite der Schmierölversorgung der Brennkraftmaschine und der Vakuumseite der von der Brennkraftmaschine angetriebenen Vakuumpumpe sitzt.

2.  Flügelzellen-Vakuumpumpe nach Anspruch 1,
dadurch gekennzeichnet, daß
der Ventilkörper (13) in dem Dosierzylinder (32) wie ein Schwebekörper derart geführt ist, daß zwischen dem Umfang des Ventilkörpers (13) und dem Dosierzylinder (32) ein Drosselspalt besteht, und daß
der Dosierweg des Ventilkörpers (13) endseitig von abdichtenden Ventilsitzen (25.1, 25.2) begrenzt wird.

11

**3.** Flügelzellen-Vakuumpumpe nach Anspruch 1,
dadurch gekennzeichnet, daß
der Ventilkörper (13) in dem Dosierzylinder (32) dichtend wie ein Kolben geführt ist, und daß
der Dosierweg des Ventilkörpers (13) endseitig von Anschlägen (31.1, 31.2) begrenzt wird, die den
Durchfluß freihalten.

**4.** Flügelzellen-Vakuumpumpe nach Anspruch 2 oder 3,
dadurch gekennzeichnet, daß
die Ventilsitze (25.1, 25.2) bzw. die Anschläge (31.1, 31.2) sowie der Ventilkörper (13) hydraulische
Aufschlagdämpfer aufweisen, die aus hydraulischen Pufferkammern und darin eintauchenden Vorsprüngen bestehen, die derart in die Pufferkammern eingepaßt sind, daß die Dämpfungswirkung mit dem
Eintauchen zunimmt.

**5.** Flügelzellen-Vakuumpumpe nach Anspruch 4,
dadurch gekennzeichnet, daß
der Ventilkörper (13) zylindrisch ausgebildet ist und daß seine Stirnflächen mit entsprechenden
Stirnflächen der Ventilsitze (25.1, 25.2) zusammenwirken, und daß der Ventilkörper (13) auf seinen den
Ventilsitzen (25.1, 25.2) zugewandten Stirnseiten Dämpfungszapfen (29.1, 29.2) besitzt, welche den
Durchlaßöffnungen des Sitzes zur Erzielung eines gewünschten Durchlaßquerschnitts angepaßt sind,
und wobei
die Dämpfungszapfen (29.1, 29.2) eine begrenzte Länge haben und der Ventilkörper so geformt ist, daß
er nicht um eine Querachse des Dosierzylinders drehbar ist.

**6.** Flügelzellen-Vakuumpumpe, die an die Schmierölversorgung eines Kraftfahrzeugmotors angeschlossen
ist,
mit einer Dosiereinrichtung zum Dosieren des Ölstroms, der unter Wirkung einer Druckdifferenz aus
einem Zufuhrkanal (9) zu einem Ablaufkanal (19) derart geführt wird, daß die Kanäle der Pumpenwelle
den Zufuhrkanal (9) mit dem Ablaufkanal (19) intermittierend in Abhängigkeit von der Drehstellung der
Pumpenwelle (4) verbinden,
gekennzeichnet durch
einen Dosierzylinder (32), in dem ein Kolben (13) gegen einen Kraftgeber beweglich ist,
und welcher mit seinem von den Kraftgeber abgewandten Dosierraum über einen Anschlußkanal sowie
über die Kanäle der Pumpenwelle (4) wechselweise mit dem Zufuhrkanal (9) und dem Ablaufkanal (19)
verbunden ist.

**7.** Flügelzellen-Vakuumpumpe nach Anspruch 6,
dadurch gekennzeichnet, daß
der Kolben (13) an seiner dem Dosierraum zugewandten Stirnseite einen Dämpfungszapfen aufweist,
der beim Entleeren des Dosierraums in den Anschlußkanal eintaucht.

**8.** Flügelzellen-Vakuumpumpe nach einem der vorangegangenen Ansprüche,
dadurch gekennzeichnet, daß
der Dosierzylinder ortsfest angeordnet ist.

**9.** Flügelzellen-Vakuumpumpe nach einem der Ansprüche 1 bis 6,
dadurch gekennzeichnet, daß
der Dosierzylinder in der Welle angeordnet ist.

**10.** Flügelzellen-Vakuumpumpe nach Anspruch 9.
dadurch gekennzeichnet, daß
der Dosierzylinder achsparallel in der Welle angeordnet ist.

**11.** Flügelzellen-Vakuumpumpe nach Anspruch 9.
dadurch gekennzeichnet, daß
der Dosierzylinder radial in der Welle liegt.

**Claims**

1.  Vane vacuum pump, which is connected to the lubricating oil supply of the engine of a motor vehicle, having a
    dosing device for dosing the oil flow which is conveyed under the effect of a pressure difference from a supply channel (9) through channels of the rotating pump shaft (4) to a discharge channel (19) in such a way that the channels of the pump shaft (4) connect the supply channel (9) to the discharge channel (19) intermittently as a function of the rotational position of the pump shaft (4),
    characterized in that
    the dosing device has a dosing cylinder (32), in which a valve body (13) is guided in a freely movable manner,
    and that
    the valve body (13) only in the state of rest of the pump shaft (4) is seated sealingly between the delivery side of the lubricating oil supply of the i.c. engine and the vacuum side of the vacuum pump driven by the i.c. engine.

2.  Vane vacuum pump according to claim 1,
    characterized in that
    the valve body (13) is guided like a float element in the dosing cylinder (32) in such a way that there is a choke gap between the periphery of the valve body (13) and the dosing cylinder (32), and that
    the dosing travel of the valve body (13) is delimited at each end by sealing valve seats (25.1, 25.2).

3.  Vane vacuum pump according to claim 1,
    characterized in that
    the valve body (13) is guided sealingly in the manner of a piston in the dosing cylinder (32), and that
    the dosing travel of the valve body (13) is delimited at each end by stops (31.1, 31.2) which keep the throughflow free.

4.  Vane vacuum pump according to claim 2 or 3,
    characterized in that
    the valve seats (25.1, 25.2) or the stops (31.1, 31.2) and the valve body (13) have hydraulic impact dampers, which comprise hydraulic buffer chambers and projections, which dip therein and are fitted into the buffer chambers in such a way that the damping action increases with immersion.

5.  Vane vacuum pump according to claim 4,
    characterized in that
    the valve body (13) is of a cylindrical construction and that its end faces cooperate with corresponding end faces of the valve seats (25.1, 25.2), and that the valve body (13) at its ends facing the valve seats (25.1, 25.2) has damping pins (29.1, 29.2) which are adapted to the through openings of the seat in order to achieve a desired throughflow cross-section, and wherein
    the damping pins (29.1, 29.2) have a limited length and the valve body is shaped in such a way that it is not rotatable about a transverse axis of the dosing cylinder.

6.  Vane vacuum pump, which is connected to the lubricating oil supply of a vehicle engine,
    having a dosing device for dosing the oil flow, which is conveyed under the effect of a pressure difference from a supply channel (9) to a discharge channel (19) in such a way that the channels of the pump shaft connect the supply channel (9) to the discharge channel (19) intermittently as a function of the rotational position of the pump shaft (4),
    characterized by
    a dosing cylinder (32), in which a piston (13) is movable against a force generating element
    and which is connected by its dosing chamber remote from the force generating element via a connection channel and via the channels of the pump shaft (4) alternately to the supply channel (9) and the discharge channel (19).

7.  Vane vacuum pump according to claim 6,
    characterized in that
    the piston (13) at its end facing the dosing chamber has a damping pin which, on emptying of the dosing chamber, dips into the connection channel.

**8.** Vane vacuum pump according to one of the preceding claims,
<u>characterized in that</u>
the dosing cylinder is disposed in a stationary manner.

**9.** Vane vacuum pump according to one of claims 1 to 6,
<u>characterized in that</u>
the dosing cylinder is disposed in the shaft.

**10.** Vane vacuum pump according to claim 9,
<u>characterized in that</u>
the dosing cylinder is disposed paraxially in the shaft.

**11.** Vane vacuum pump according to claim 9,
<u>characterized in that</u>
the dosing cylinder is situated radially in the shaft.

**Revendications**

**1.** Pompe à vide à palettes qui est reliée au circuit d'alimentation en huile d'un moteur de véhicule automobile, comportant un dispositif de dosage destiné au dosage du débit d'huile qui, par l'action d'unu gradient de pression est amené d'un conduit d'entrée (9) à travers des canaux dans l'arbre (4) tournant de la pompe vers un conduit de sortie (19) de manière telle que les conduits dans l'arbre (4) de la pompe connectent de manière intermittente le conduit d'entrée (9) au conduit de sortie (19) en fonction de la position angulaire de l'arbe (4) de la pompe, caractérisée par le fait que le dispositif de dosage comporte un cylindre de dosage (32) à l'intérieur duquel un corps formant valve (13) est guidé avec possibilité de déplacement libre et par le fait que, uniquement lorsque l'arbre (4) de pompe est arrêté, le corps formant valve (13) assure l'étanchéité entre le côté refoulement du circuit d'alimentation en huile du moteur à combustion interne et le côté vide de la pompe à vide entraînée par ledit moteur à combustion interne.

**2.** Pompe à vide à palettes selon la revendication 1, caractérisée par le fait que le corps formant valve (13) est guidé dans le cylindre de dosage (32) à la manière d'un élément flottant de telle sorte qu'il subsiste un espace d'étranglement entre la périphérie du corps formant valve (13) et le cylindre doseur (32) et que la course de dosage du corps formant valve (13) est limitée côté extrémités par des sièges (25.1, 25.2) qui assurent l'étanchéité.

**3.** Pompe à vide à palettes selon la revendication 1, caractérisée par le fait que le corps formant valve (13) est guidé avec étanchéité dans le cylindre de dosage (32) à la manière d'un piston et que la course de dosage du corps formant valve (13) est limitée côté extrémités par des butées (31.1, 31.2) qui maintiennent le passage libre.

**4.** Pompe à vide à palettes selon la revendication 2 ou 3, caractérisée par le fait que les sièges (25.1, 25.2) ou les butées (31.1, 31.2) ainsi que le corps formant valve (13) présentent des amortisseurs hydrauliques de fermeture qui sont formés par des chambres d'amortissement hydrauliques et des parties plongeuses en saillie qui s'adaptent dans les chambres d'amortissement de telle sorte que l'amortissement augmente avec la pénétration des parties en saillie.

**5.** Pompe à vide à palettes selon la revendication 4, caractérisée par le fait que le corps formant valve (13) est cylindrique et que ses faces frontales coopèrent avec des surfaces frontales conjuguées des sièges (25.1, 25.2) et que le corps formant valve (13) comporte sur ses faces frontales tournées vers les sièges (25.1, 25.2) des têtons (29,1, 29.2) qui sont adaptés aux orifices de passage du siège aux fins d'obtenir une section de passage souhaitée, les têtons d'amortissement (29.1, 29.2) ayant une longueur limitée et l'élément formant valve étant conformé de telle sorte que celui-ci ne puisse pas tourner autour d'un axe transversal du cylindre de dosage.

**6.** Pompe à vide à palettes qui est reliée au circuit d'alimentation en huile d'un moteur de véhicule automobile, comportant un dispositif de dosage destiné au dosage du débit d'huile qui, par l'action d'un gradient de pression est amené d'un conduit d'entrée (9) vers un conduit de sortie (19) de manière telle que les conduits dans l'arbre (4) de la pompe connectent de manière intermittente le conduit d'entrée (9) au conduit de sortie (19) en fonction de la position angulaire de l'arbe (4) de la pompe, caractérisée par un cylindre de dosage (32) à l'intérieur duquel un piston (13) est monté mobile à l'encontre d'un dispositif de génération de force, lequel cylindre, par sa chambre de dosage éloignée du dispositif de génération de force, est connecté de manière intermittente avec le conduit d'entrée (9) et le conduit de sortie (19) par l'intermédiaire d'un conduit de raccordement et de canaux dans l'arbre (4) de la pompe.

7. Pompe à vide à palettes selon la revendication 6, caractérisée par le fait que le piston (13) présente sur sa face frontale tournée vers la chambre de dosage un têton d'amortissement qui, lors de la vidange de la chambre de dosage pénètre dans le conduit de raccordement.

8. Pompe à vide à palettes selon l'une des revendications précédentes, caractérisée par le fait que le cylindre de dosage est fixe.

9. Pompe à vide à palettes selon l'une des revendications 1 à 6, caractérisée par le fait que le cylindre de dosage est disposé dans l'axe.

10. Pompe à vide à palettes selon la revendication 9, caractérisée par le fait que le cylindre de dosage est disposé dans l'arbre parallèlement à l'axe de celui-ci.

11. Pompe à vide à palettes selon la revendication 9, caractérisée par le fait que le cylindre de dosage est disposé radialement dans l'arbre.

FIG. 1

FIG.2

FIG. 3

Fig. 4

Fig. 5

Fig. 6

Fig. 7

Fig. 8

Fig. 9

Fig. 10

Fig. 11

Fig. 10A

EP 0 406 800 B1